# EUROPEAN PATENT APPLICATION

(11) **EP 4 510 341 A1**
(43) Date of publication of application: **19.02.2025**
(21) Application number: 22963086.8
(22) Date of filing: 27.10.2022
(51) Int. Cl.: H01M 50/289, H01M 50/244, H01M 10/613

(54) **BATTERY AND ELECTRIC DEVICE**

(71) Applicant: Contemporary Amperex Technology Co., Limited, Ningde, Fujian 352100 (CN)
(72) Inventor: XU, Hu, Ningde, Fujian 352100 (CN); JIN, Haizu, Ningde, Fujian 352100 (CN); NIU, Shaojun, Ningde, Fujian 352100 (CN); ZHAO, Fenggang, Ningde, Fujian 352100 (CN); ZENG, Yuqun, Ningde, Fujian 352100 (CN)
(74) Representative: Ran, Handong
(86) International application number: PCT/CN2022/127968
(87) International publication number: WO 2024/087102

(57) **Abstract**

A battery (1000) and an electric device (2000). The battery (1000) comprises: a plurality of battery rows (10), which are arranged in a first direction (F1), wherein each battery row (10) comprises a plurality of battery cells (11) arranged in a second direction (F2), the second direction (F2) being perpendicular to the first direction (F1); and a reinforcing structure (20), which comprises a first reinforcing structure (21) and a second reinforcing structure (22) connected to each other, wherein the first reinforcing structure (21) and the plurality of battery rows (10) are arranged in a stacked manner in the first direction (F1), and the second reinforcing structure and the plurality of battery cells (11) of the same battery row (10) are arranged in a stacked manner in the second direction (F2).

## Description

### FIELD

The present application relates to the field of battery technologies, and more particularly, to a battery and an electric device.

### BACKGROUND

In the related art, a battery has poor structural strength. As a result, structural damage would be easily caused when collision and the like occurs on the battery.

### SUMMARY

An embodiment of the present application provides a battery and an electric device, which can enhance overall structural strength to prevent a battery cell from being damaged due to collision on the battery cell.

In a first aspect, an embodiment of the present application provides a battery including: a plurality of battery rows arranged in a first direction, in which each of the plurality of battery rows includes a plurality of battery cells arranged in a second direction perpendicular to the first direction; and a reinforcing structure including at least one first reinforcing structure extending in the second direction and a second reinforcing structure extending in the first direction, in which the at least one first reinforcing structure is connected to the second reinforcing structure, the at least one first reinforcing structure and the plurality of battery rows are stacked in the first direction, and the second reinforcing structure and the plurality of battery cells in one battery row of the plurality of battery rows are stacked in the second direction.

In the technical solution above, the reinforcing structure includes the at least one first reinforcing structure and the second reinforcing structure connected to each other to form a fishbone-like structure. In this way, the structural strength of the reinforcing structure is high. In addition, the at least one first reinforcing structure and the plurality of battery rows are stacked, and the second reinforcing structure and the plurality of battery cells of the battery row are stacked. In this way, the battery cells can be supported in different directions. As a result, the overall structural stability of the battery can be significantly improved, and a damage risk of the battery cells is greatly reduced, thereby improving the stability and the service life of the battery cells. Further, use safety and reliability of the battery can be ensured. Moreover, design of the dimension of the battery cell is more flexible to meet use demands on different batteries.

In some embodiments, each of the plurality of battery cells in one battery row is connected to one of the at least one reinforcing structure adjacent to the one battery row. In the above technical solution, the overall structural strength can be further enhanced.

In some embodiments, each of the at least one first reinforcing structure is located between two adjacent battery rows of the plurality of battery rows. Each of the two adjacent battery rows is connected to one of the at least one first reinforcing structure adjacent to the battery row. In the above technical solution, the overall structural strength can be further enhanced through simpler structure.

In some embodiments, the second reinforcing structure is located between two adj acent battery cells of the plurality of battery cells in one battery row of the plurality of battery rows. Each of the two adjacent battery cells in the one battery row is connected to the second reinforcing structure adjacent to the battery cell. In the above technical solution, the overall structural strength can be further enhanced.

In some embodiments, the second reinforcing structure is arranged on at least one side of each of the at least one first reinforcing structure in the first direction. In the above technical solution, the overall structural strength can be further enhanced.

In some embodiments, each of the at least one first reinforcing structure includes a plurality of first reinforcing structures arranged in the first direction. The second reinforcing structures on two adjacent first reinforcing structures of the plurality of first reinforcing structures are separated from or connected to each other. In the above technical solution, the overall strength of the reinforcing structure can be enhanced, or the assembling of the reinforcing structure and the battery cells is easily.

In some embodiments, the reinforcing structure has a channel configured to accommodate heat exchange medium. The reinforcing structure is in a thermally conductive connection with one of the plurality of battery cells adjacent to the reinforcing structure for adjusting a temperature of the battery cell. In the above technical solution, the structure enhancement and the temperature adjustment are integrated in the reinforcing structure.

In some embodiments, each of the at least one first reinforcing structure and the second reinforcing structure has the channel. The channel of each of the at least one first reinforcing structure is in communication with the channel of the second reinforcing structure. In the above technical solution, it is possible to facilitate pipeline connection.

In some embodiments, each of the at least one first reinforcing structure includes one first reinforcing structure or a plurality of first reinforcing structures arranged in the first direction. The battery further includes a diversion member and a confluence member respectively located on two sides of each of the plurality of battery rows in the second direction. The channel of each of at least one first reinforcing structure has an inlet in communication with the diversion member and an outlet in communication with the confluence member. In the above technical solution, it is possible to facilitate pipeline connection for heat exchange.

In some embodiments, the channel of each of the plurality of first reinforcing structures is in communication with the channel of one second reinforcing structure. The second reinforcing structure has a manifold inlet and a manifold outlet respectively defined on two ends of the second reinforcing structure in the first direction. In the above technical solution, it is possible to remove a diversion structure and a confluence structure, thereby improving utilization of an internal space of the battery.

In some embodiments, an end surface of each of the plurality of battery cells in the first direction is a first surface. An end surface of each of the plurality of battery cells in the second direction is a second surface. At least one first surface of each of the plurality of battery cells is adjacent to one of the at least one first reinforcing structure. At least one second surface of each of the plurality of battery cells is adjacent to the second reinforcing structure. In the above technical solution, it is possible to ensure that the strength of each battery cell can be enhanced.

In some embodiments, an area of the first surface is greater than an area of the second surface. In the above technical solution, supporting effect of the first reinforcing structure to the battery cells can be improved.

In some embodiments, an end surface of each of the plurality of battery cells in the first direction is a first surface having the largest area. In the above technical solution, it is beneficial for the first reinforcing structure to tightly clamp the battery cell to prevent electrode plates from being mis-located.

In some embodiments, in the second direction, at least one end of each of the at least one first reinforcing structure extends beyond an end surface of a housing of the battery row at a corresponding end. In the above technical solution, collision between the housing and the adjacent components can be avoided to further enhance the structural strength.

In some embodiments, each of the plurality of battery rows has an electrical connection portion provided on an end surface of at least one end of the battery row in the second direction, each of the at least one first reinforcing structure exceeding beyond the electrical connection portion at the corresponding end. In the above technical solution, the first reinforcing structure can also prevent the electrical connection portion from being damaged due to the impaction.

In some embodiments, the battery further includes an electrical connection member connected to the electrical connection portion. Each of the at least one first reinforcing structure exceeds beyond the electrical connection member at the corresponding end. In the above technical solution, the first reinforcing structure can also prevent the electrical connection member from being damaged due to the impaction.

In some embodiments, each of the at least one first reinforcing structure is a reinforcing plate having an avoiding through hole. The electrical connection member passes through the avoiding through hole to connect the electrical connection portions of two adjacent battery rows of the plurality of battery rows. In the above technical solution, interference between the reinforcing plate and the electrical connection structure can be avoided.

In some embodiments, each of the plurality of battery rows includes two battery cells, and each of the two battery cells includes an electrical connection portion arranged at each of sides of the two battery cells that face away from each other. The second reinforcing structure is arranged between the two battery cells. In the above technical solution, the battery cells can cooperate with the second reinforcing structure more stably.

In some embodiments, each of the plurality of battery cells has a pressure relief portion and an electrical connection portion. The pressure relief portion and the electrical connection portion are arranged on different sides of the battery cell. In the above technical solution, it is possible to avoid severer thermal runaway due to too high temperature of the electrical connection portion, which is caused by pressure relief during the thermal runaway.

In some embodiments, an end surface of each of the plurality of battery cells in the second direction is a second surface. An end surface of each of the plurality of battery cells in a third direction is a third surface. The third direction is perpendicular to each of the first direction and the second direction. The electrical connection portion is arranged on the second surface. The pressure relief portion is arranged on the third surface. In the above technical solution, the pressure relief portion does not release pressure towards any battery cell.

In a second aspect, an embodiment of the present application also provides an electric device including the battery described above. The battery is configured to provide electric energy to the electric device.

### BRIEF DESCRIPTION OF THE DRAWINGS

FIG. 1 is a view of a battery according to an embodiment of the present application in a third direction;
FIG. 2 is a view of the battery shown in FIG. 1 in a second direction;
FIG. 3 is a schematic view of a first reinforcing structure, a second reinforcing structure, and two battery rows according to an embodiment of the present application;
FIG. 4 is a schematic view of a reinforcing structure according to some embodiments of the present application;
FIG. 5 is a schematic view of a first reinforcing structure and a second reinforcing structure connected to first reinforcing structure according to some other embodiments of the present application;
FIG. 6 to FIG. 8 are schematic views of a battery cell according to three embodiments of the present application; and
FIG. 9 is a schematic view of an electric device according to some embodiments of the present application.

### Reference Signs of Drawings:

battery 1000; electric device 2000;
battery row 10; battery cell 11; first surface 111; second surface 112; third surface 113; pressure relief portion 114; electrical connection portion 115; electrical connection member 12;
reinforcing structure 20; first reinforcing structure 21; second reinforcing structure 22;
case 40;
first direction F1, second direction F2, third direction F3.

### DESCRIPTION OF EMBODIMENTS

In order to make objectives, technical solutions and advantages of the embodiments of the present application clearer, the technical solutions in the embodiments of the present application are clearly described below in conjunction with the drawings in the embodiments of the present application. Obviously, the described embodiments are some embodiments of the present application rather than all embodiments. Based on the embodiments of the present application, all other embodiments obtained by those skilled in the art without creative efforts shall fall within the scope of the present application.

Unless otherwise defined, all technical and scientific terms used in the present application have the same meaning as commonly understood by those skilled in the art of the present application. The terms used in the description of the present application are only for the purpose of describing exemplary embodiments and are not intended to limit the present application. The terms "include" and "have" as well as any variations thereof in the specification, claims or the description of the accompanying drawings of the present application are intended to cover non-exclusive inclusion. The terms "first", "second" and the like in the specification, claims or the description of the accompanying drawings of the present application are used for distinguishing different objects, but are not used for describing a specific sequence or a primary and secondary relationship.

The "embodiment" in the present application means that a particular feature, structure, or characteristic described in connection with an embodiment may be included in at least one embodiment of the present application. The appearances of this phrase in various positions in the specification are not necessarily all referring to the same embodiment, nor are independent or alternative embodiments mutually exclusive of other embodiments.

In the description of the present application, it should be noted that unless otherwise specified and limited, terms "mount", "communicate", "connect" and "attach" should be understood in a broad sense, for example, it may be fixedly connected or detachably connected, or integrally connected; and it may be directly connected or indirectly connected by means of an intermediate medium, and it may be communication of two internal elements. For those skilled in the art, the specific meaning of the term in the present application can be understood according to specific conditions.

A term "and/or" in the present application is merely an association relationship describing associated objects, and indicates that there may be three relationships. For example, A and/or B may indicate three cases as below: A exists alone, A and B exist at the same time, and B exists alone. In addition, a character "/" in the present application generally indicates that former and later associated objects are in an "or" relationship.

In the embodiments of the present application, the same reference signs refer to the same component, and for the sake of being concise, a detailed description of the same component is omitted in different embodiments. It should be understood that dimensions, such as thickness, length and width, of various components in the embodiments of the present application shown in the drawings, and dimensions such as overall thickness, length and width of an integrated device are merely illustrative and should not limit the present application.

In the present application, "a plurality of" means more than two (including two).

In the present application, a battery refers to a single physical module that includes one or more battery cells to provide relatively high voltage and capacity. For example, the battery mentioned in the present application may include a battery module, a battery pack, or the like. Some batteries may include a housing for encapsulating one or more battery cells or a plurality of battery modules. The housing can prevent liquid or other impurity substance from affecting charging or discharging of the battery cell. Further, it is possible that some batteries may do not include the housing and are directly arranged in a battery installation cabin of an electric device.

In the present application, the battery cell may include a lithium-ion secondary battery, a lithium-ion primary battery, a lithium-sulfur battery, a sodium lithium-ion battery, a sodium-ion battery, a magnesium-ion battery, or the like, which is not limited in the embodiments of the present application. The battery cell may be a cylinder, a flat body, a cuboid, or other shapes, which is not limited in the embodiments of the present application. The battery cell is generally divided into three types based on a packaging manner, i.e., a cylindrical battery cell, a square battery cell, and a soft package battery cell, which is not limited in the embodiments of the present application.

For example, the battery cell may include a housing, an electrode assembly, and an electrolytic solution. The housing is used to accommodate the electrode assembly and the electrolytic solution. The electrode assembly includes a positive electrode plate, a negative electrode plate, and a separator. The battery cell operates mainly based on moving of metal ions between the positive electrode plate and the negative electrode plate. The positive electrode plate includes a positive electrode current collector and a positive electrode active material layer, and the positive electrode active material layer is coated on a surface of the positive electrode current collector. A part of the positive electrode current collector that is not coated with the positive electrode active material layer protrudes from a part of the positive electrode current collector coated with the positive electrode active material layer, and the part of the positive electrode current collector that is not coated with the positive electrode active material layer is used as a positive tab. As taking a lithium-ion battery as an example, a material of the positive electrode current collector may be aluminum, and the positive electrode active material may be lithium cobalt oxide, lithium iron phosphate, ternary lithium, lithium manganate or the like.

The negative electrode plate includes a negative electrode current collector and a negative electrode active material layer, and the negative electrode active material layer is coated on a surface of the negative electrode current collector. A part of the negative electrode current collector that is not coated with the negative electrode active material layer protrudes from a part of the negative electrode current collector coated with the negative electrode active material layer, and the part of the negative electrode current collector that is not coated with the negative electrode active material layer is used as a negative tab. A material of the negative electrode current collector may be copper, and the negative electrode active material may be carbon, silicon or the like. In order to ensure that fusing is not occurred when a large current passes through, a plurality of positive tabs is provided and stacked together, and a plurality of negative tabs is provided and stacked together.

A material of the separator may be PP (polypropylene), PE (polyethylene) or the like. In addition, the electrode assembly may be a wound structure or a stacked structure, and the embodiments of the present application are not limited thereto.

The battery cell may be provided with an electrode terminal and the like, which is connected with the tab to serve as an electrical connection portion of the battery cell. Moreover, the battery cell may have a pressure relief portion. When an internal pressure of the battery cell is too large (for example, thermal runaway), the pressure relief portion is used for releasing internal substances (such as, gas, liquid, and particulate matters) of the battery cell, in order to reduce the internal pressure of the battery cell. This can avoid dangerous accidents such as deflagration of the battery cell caused by too fast pressurization inside the battery cell. For example, the pressure relief portion is an explosion-proof valve, an explosion-proof sheet and the like.

For example, in an electric device of some related technologies, a battery is used for supplying power, the battery includes a case and a battery cell, and the casing includes an upper case and a lower case. The structural strength of the battery cell is relatively poor, and particularly, the structural strength of the battery cell with a relatively small dimension is relatively poor, resulting in that the overall structural strength of the battery is relatively poor. For example, when a collision occurs, the battery cell and the adjacent component or the housing are prone to collision and damage.

In order to solve the problem of poor structural strength of the battery cell, it is found that the structure of the battery could be improved to increase the structural strength of the battery.

In view of the above, after researching, there is provided a battery 1000. The battery 1000 includes a reinforcing structure 20 and a plurality of battery rows 10. The plurality of battery rows 10 are arranged in a first direction F1. Each of the battery rows 10 includes a plurality of battery cells 11 arranged in a second direction F2 perpendicular to the first direction F1. The reinforcing structure 20 includes at least one first reinforcing structure 21 extending in the second direction F2 and a second reinforcing structure 22 extending in the first direction F1. The at least one first reinforcing structure 21 is connected to the second reinforcing structure 22. The at least one first reinforcing structure 21 and the plurality of battery rows 10 are stacked in the first direction F1, and the second reinforcing structure 22 and the plurality of battery cells 11 in one battery row 10 are stacked in the second direction F2.

In the battery 1000 with such a structure, the reinforcing structure 20 can provide a framework supporting to enhance overall structural strength of the battery 1000. As a result, when the battery 1000 is impacted, the reinforcing structure 20 can bear an external force, for example, can bear an impact force transmitted from the case 40, to reduce an impact of the external force on the battery cell 11 to alleviate a damage degree of the battery cell 11. Therefore, it is possible to avoid serious thermal runaway, or to avoid the impact of the external force on the battery cell 11 to prevent the battery cell 11 from being damaged due to collision.

In addition, compared with a battery cell is fixed only through an adhesive in the related art, the structural strength can be significantly enhanced by the reinforcing structure 20. As a result, the structural strength is more reliable, and it is hard to age or soften. Therefore, the reinforcing structure 20 has a higher mechanical strength to bear a larger impact force, thereby greatly prolonging service life.

The battery 1000 according to the embodiment of the present application may be applied in, but not limited to, an electric device 2000 such as a vehicle, a ship or an aircraft to enable the battery 1000 according to the present application and the like to form a power supply system of the electric device 2000 to ensure use safety and reliability of the electric device 2000.

For example, the electric device 2000 according to the embodiment of the present application may be, but is not limited to, a vehicle, a mobile phone, a tablet, a notebook computer, a ship, a spacecraft, an electric toy, an electric tool, and the like. The vehicle may be a fuel vehicle, a gas vehicle, a new energy vehicle, or a rail vehicle. The new energy vehicle may be an electric vehicle, a hybrid electric vehicle, or an extended-range electric vehicle. The spacecraft includes an airplane, a rocket, an aircraft, a spaceship, and the like. The electric toy includes a fixed or movable electric toy, such as a game machine, an electric vehicle toy, an electric ship toy, and an electric plane toy. The electric tool includes an electric metal cutting tool, an electric grinding tool, an electric assembling tool, and an electric railway tool, such as an electric drill, an electric grinding machine, an electric wrench, an electric screwdriver, an electric hammer, an impact electric drill, a concrete vibrator, and an electric planer.

Hereinafter, a battery 1000 according to an embodiment of the present application will be described with reference to the drawings.

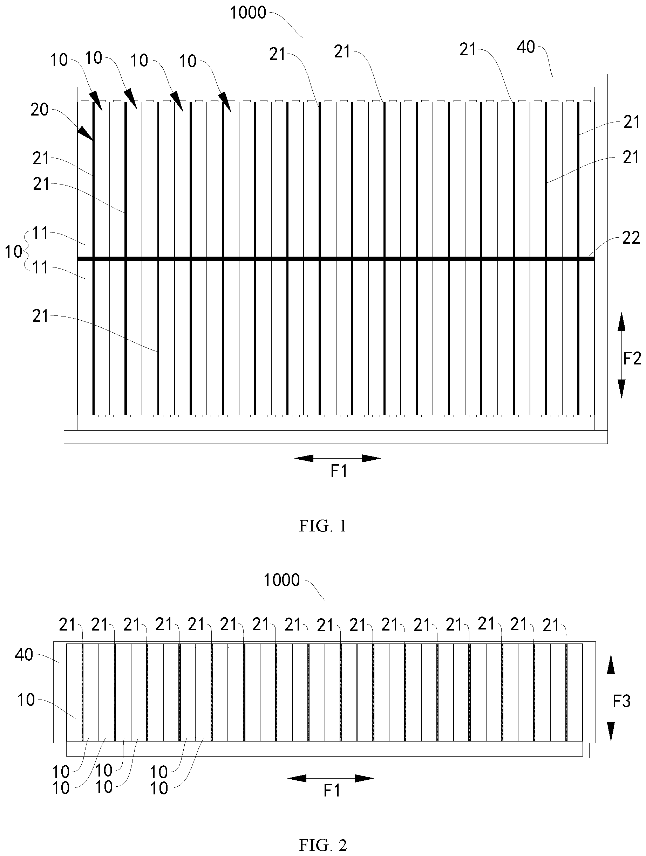

As shown in FIGS. 1 to 5, the battery 1000 includes a reinforcing structure 20 and a plurality of battery rows 10. The plurality of battery rows 10 are arranged in a first direction F1. Each of the plurality of battery rows 10 includes a plurality of battery cells 11 arranged in a second direction F2 perpendicular to the first direction F1. The reinforcing structure 20 includes at least one first reinforcing structure 21 extending in the second direction F2 and a second reinforcing structure 22 extending in the first direction F1. The at least one first reinforcing structure 21 is connected to the second reinforcing structure 22. The at least on first reinforcing structure 21 and the plurality of battery rows 10 are stacked in the first direction F1, and the second reinforcing structure 22 and the plurality of battery cells 11 in one battery row 10 are stacked in the second direction F2.

The reinforcing structure 20 is a structure that can provide structure reinforcing effect to enhance the structural strength of the plurality of battery rows 10 and the whole battery 1000. The reinforcing structure 20 includes the at least one first reinforcing structure 21 extending in the second direction F2 and the second reinforcing structure 22 extending in the first direction F1.

It should be noted that, specific structures of the at least one first reinforcing structure 21 and the second reinforcing structure 22 are not specially limited. For example, as shown in FIGS. 1 and 2, the first reinforcing structure 21 may be a rectangular plate. Further, a length direction of the rectangular plate extends in the second direction F2, or a width direction of the rectangular plate extends in the second direction F2. Furthermore, a thickness direction of the rectangular plate may extend in the first direction F1. In this way, the plurality of battery rows 10 can be arranged compactly. Certainly, the at least one first reinforcing structure 21 may also be of other shapes in addition to the plate-like shape. Similarly, the second reinforcing structure 22 may be a rectangular plate or other shapes in addition to the plate-like shape, as long as each of the first reinforcing structure 21 and the second reinforcing structure 22 can meet requirement for enhancing the overall strength of the battery 1000.

The first reinforcing structure 21 may be made of a metal such as steel, aluminum and the like. Also, the first reinforcing structure 21 may be made of a nonmetal such as plastic, a composite material, and the like having relatively high strength. The second reinforcing structure 22 may be made of a metal such as steel, aluminum, or the like. Also, the second reinforcing structure 22 may be made of a nonmetal such as plastic, a composite material having relatively high strength. In addition, the second reinforcing structure 22 may be made of same or different material as or from the first reinforcing structure 21. The second reinforcing structure 22 and the first reinforcing structure 21 may be connected to each other through bonding, welding, fastener connection, integral forming, etc., which is not limited in the present application.

As shown in FIGS. 1 to 3, the first reinforcing structure 21 and the plurality of battery rows 10 are stacked in the first direction F1. That is, in the first direction F1, a projection of the first reinforcing structure 21 at least partially overlaps with and projections of the plurality of battery rows 10. As a result, it is easier for the first reinforcing structure 21 to enhance the overall structural strength of the battery rows 10. In addition, each of the first reinforcing structure 21 and the battery row 10 has a more compact structure.

For example, the at least one first reinforcing structure 21 may include one first reinforcing structure 21 or a plurality of first reinforcing structures 21. Further, the larger the number of the first reinforcing structures 21 is, the better the effect of enhancing the structural stability of the battery 1000 is. The first reinforcing structure 21 may be arranged on a side of the plurality of battery rows 10 in the first direction F1. That is, the plurality of battery rows 10 and the first reinforcing structure 21 are sequentially arranged in the first direction F1. The first reinforcing structure 21 may also be arranged between two adjacent battery rows 10. That is, one battery row 10, the first reinforcing structure 21 and the other battery row 10 are sequentially arranged in the first direction F1. In some embodiments where the at least one first reinforcing structure 21 includes the plurality of first reinforcing structures 21, at least one battery row 10 is arranged between two adjacent first reinforcing structures 21. Further, each of the plurality of first reinforcing structures 21 may be arranged between two adjacent battery rows 10, or the plurality of first reinforcing structures 21 may be arranged on the same sides of the plurality of battery rows 10, respectively.

As shown in FIGS. 1 to 3, the second reinforcing structure 22 is connected to the first reinforcing structure 21. For example, the second reinforcing structure 22 may be arranged on a side of the first reinforcing structure 21 at which the battery row 10 is arranged. In this way, each of the first reinforcing structure 21 and each of the second reinforcing structures 22 are generally formed into a T-shaped or L-shaped structure. Therefore, the overall structural strength of the reinforcing structure 20 can be enhanced, thereby enhancing the strength of the battery 1000.

The second reinforcing structure 22 and the plurality of battery cells 11 in one battery row 10 are stacked in the second direction F2. That is, a projection of the second reinforcing structure 22 at least partially overlaps with a projection of the battery row 10 in the second direction F2. As a result, supporting effect of the second reinforcing structure 22 on the battery row 10 is better, and thus the overall structural strength of the battery row 10 can be easily enhanced. In addition, each of the second reinforcing structure 22 and the battery row 10 has a more compact structure.

For example, one or more second reinforcing structures 22 may be provided. Further, the larger the number of the second reinforcing structures 22 is, the better the effect of enhancing the structural stability of the battery 1000 is. The second reinforcing structure 22 may be located on a side of the whole battery row 10 in the second direction F2. Or, the second reinforcing structure 22 may be located between two adjacent battery cells 11 to form a three-layer structure of the battery cell 11-the second reinforcing structure 22-the battery cell 11, which is more beneficial to further enhancing the strength. Further, the second reinforcing structure 22 can separate two adjacent battery cells 11 from each other, and thus heat diffusion can be avoided in a case where the second reinforcing structure 22 uses a heat insulation material.

Since the reinforcing structure 20 can enhance the overall structural strength of the battery 1000, a dimension design of each battery cell 11 is not limited. That is, a length of the battery cell 11 may be relatively large (for example, greater than or equal to 140 mm) to meet the requirements of large capacity, large mounting space and so on. Further, the battery cell 11 with the relatively large dimension has higher structural strength. In addition, the length of the battery cell 11 may also be relatively small (for example, smaller than 140 mm) to meet the requirements of relatively small mounting space, small capacity, low difficulties of processing of the battery cell 11, and avoiding lower power performance due to long electrode plate, and the like. In addition, it is not easy for the battery cell 11 with the relatively small dimension to be damaged due to the reinforcing structure 20.

With the battery 1000 according to the embodiment of the present application, the reinforcing structure 20 includes the first reinforcing structure 21 and the second reinforcing structure 22 connected to each other to form a fishbone-like structure. In this way, the reinforcing structure 20 itself has higher structural strength. Further, the first reinforcing structures 21 and the plurality of battery rows 10 are stacked, and the second reinforcing structures 21 and the plurality of battery cells 11 in one battery row 10 are stacked. In this way, it is possible to provide support to the battery cells 11 in different directions, which significantly improves the overall structural stability of the battery 1000, thereby greatly reducing damage to the battery cells 11 to improve the stability and the service life of the battery cells 11. Therefore, the use safety and reliability of the battery 1000 can be ensured. In addition, the dimension of the battery cell 11 can be designed more flexibly to meet use requirements of different batteries 1000. When the battery 1000 according to the embodiments of the present application is applied in an electric device 2000, a power supply system of the electric device 2000 may employ the battery 1000 according to the embodiments of the present application to improve use safety and reliability of the electric device 2000.

In some embodiments of the present application, as shown in FIGS. 1 to 3, each of the plurality of battery cells 11 in one battery row 10 is connected to the first reinforcing structure 21 adjacent to the battery cell. Thus, the first reinforcing structures 21 can connect the plurality of battery cells 11 into one piece to further enhance the structural strength of the battery row 10, thereby improving anti-impact capacity.

It should be noted that the connection manner of each battery cell 11 and the first reinforcing structure 21 is not specially limited in the present application. For example, the battery cell 11 and the first reinforcing structure 21 may be connected to each other through bonding, welding, fastener connection, or the like.

In some embodiments of the present application, as shown in FIGS. 1 to 3, the first reinforcing structure 21 is located between two adjacent battery rows 10, and the two adjacent battery rows 10 are both connected to the first reinforcing structures 21 adjacent to the battery rows 10. In other words, a structure of at least three layers of the battery row 10-the first reinforcing structure 21-the battery row 10 is formed.

In this way, it is possible to further enhance the strength of the battery 1000. Further, each first reinforcing structure 21 can connect the plurality of battery cells 11 in two battery rows 10 together. As a result, it is beneficial to reduce the number of the first reinforcing structures 21 and simplify the structure of the battery 1000. In addition, the first reinforcing structure 21 can also separate two adjacent battery rows 10 from each other. In this way, a certain heat insulation effect can be achieved in a case where the first reinforcing structure 21 employs a heat insulation material, thereby avoiding heat diffusion.

In some embodiments, as shown in FIGS. 1 to 3, the second reinforcing structure 22 is located between two adjacent battery cells 11 in one battery row 10. The two adjacent battery cells 11 in one battery row 10 are both connected to the second reinforcing structure 22.

The second reinforcing structure 22 is located between two adjacent battery cells 11 in one battery row 10 to separate the two adjacent battery cells 11 from each other and provide support for the two adjacent battery cells 11. The two adjacent battery cells 11 in one battery row 10 are both connected to the second reinforcing structure 22. For example, the two adjacent battery cells 11 in one battery row 10 are both connected to the second reinforcing structure 22 through bonding, welding, fastener connection, or the like, to connect the two adjacent battery cells 11 in one battery row 10 together by the second reinforcing structure 22. Therefore, the structural strength of the battery row 10 can be further enhanced, thereby improving the anti-impact capacity.

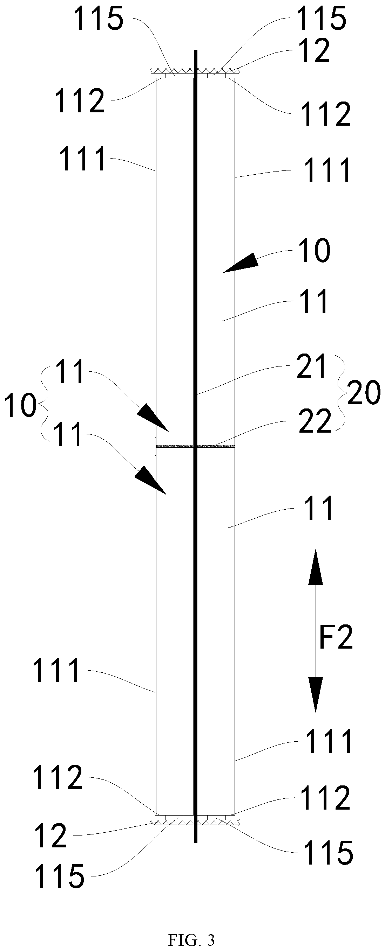

In some exemplary embodiments, referring to FIG. 3, end surfaces, close to each other, of two adjacent battery cells 11 in one battery row 10 are not provided with structures such as electrical connection portions 115. In this way, the two end surfaces can be directly attached with and bonded to the second reinforcing structure 22. As a result, better supporting effect and strength enhancement effect can be provided.

In some embodiments, as shown in FIGS. 3 to 5, the second reinforcing structure 22 is arranged on at least one side of the first reinforcing structure 21 in the first direction F1.

When one or two second reinforcing structures 22 are arranged on one side of the first reinforcing structure 21, the first reinforcing structure 21 and the second reinforcing structure 22 connected to the first reinforcing structure 21 are generally formed into an L-shaped or T-shaped structure. When the second reinforcing structure 22 is arranged on each of two sides of the first reinforcing structure 21, the first reinforcing structure 21 and the second reinforcing structures 22 on the two sides are generally formed into a cross-shaped structure. When a plurality of second reinforcing structures 22 is arranged on each of the two sides of the first reinforcing structure 21, the first reinforcing structure 21 and the second reinforcing structures 22 on the two sides are generally formed into a fishbone-shaped structure. The number of the second reinforcing structures 22 may be flexibly set based on the strength enhancement requirements and the number of the battery cells 11 included in the battery row 10.

According to some embodiments of the present application, as shown in FIGS. 1 to 5, the at least one first reinforcing structure 21 includes a plurality of first reinforcing structures 21 arranged in the first direction F1, and the second reinforcing structures 22 on two adjacent first reinforcing structures 21 are separated from or connected to each other.

The at least one first reinforcing structure 21 may include two, three or more first reinforcing structures 21, and the specific number of the first reinforcing structures 21 may be flexibly set based on an arrangement position of the first reinforcing structures 21 as well as the number and the structural strength requirements of the battery rows 10. For example, as shown in FIG. 1, the battery 1000 includes 32 battery rows 10, and the reinforcing structure 20 includes 16 first reinforcing structures 21. Further, each first reinforcing structure 21 is arranged between two adjacent battery rows 10, and two battery rows 10 are arranged between any two adjacent first reinforcing structures 21.

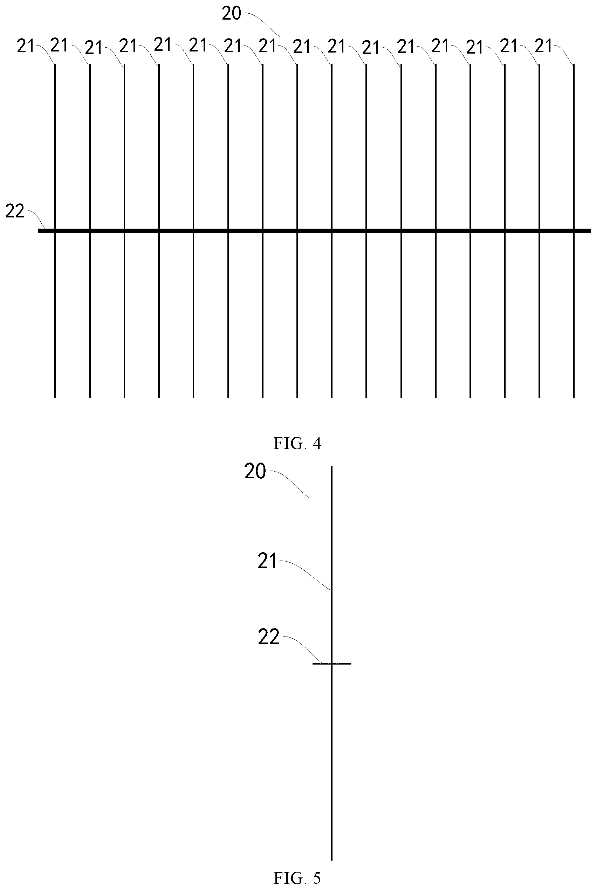

As shown in FIG. 3 and FIG. 5, the second reinforcing structures 22 on the two adjacent first reinforcing structures 21 are separated from each other. That is, the second reinforcing structures 22 on sides, close to each other, of two adjacent first reinforcing structures 21 are not connected to each other to facilitate the processing of the reinforcing structure 20 and assembling of the reinforcing structure 20 and the battery cell 11. Or, as shown in FIG. 4, the second reinforcing structures 22 on two adjacent first reinforcing structures 21 are connected to each other. In this way, the two adjacent first reinforcing structures 21 are connected together by the second reinforcing structures 22. In addition, the reinforcing structure 20 is formed into the fishbone-like structure or a grid structure further enhance the overall structural strength.

According to some embodiments of the present application, as shown in FIG. 2, in a third direction F3 perpendicular to both the first direction F1 and the second direction F2, a dimension of the reinforcing structure 20 is smaller than or equal to a spacing between end surfaces of the two ends of the battery row 10.

For example, the battery row 10 has two end surfaces opposite to each other in the third direction F3, for example, an upper end surface and a lower end surface. By designing the dimension of the reinforcing structure 20 to be smaller than or equal to the spacing between the two end surfaces, it is beneficial for reducing an occupied space of the reinforcing structure 20 in the third direction F3 and reducing an overall dimension of the battery 1000 in the third direction F3 to allow the battery 1000 to be applied in a smaller mounting space such as vehicle bottom mounting space.

In some embodiments of the present application, the reinforcing structure 20 has a channel configured to accommodate heat exchange medium. The reinforcing structure 20 is in a thermally conductive connection with the battery cell 11 to the reinforcing structure 20 for adjusting a temperature of the battery cell 11.

The heat exchange medium may be liquid (for example, water, mixed liquid of water and ethylene glycol, and the like), gas (for example, air and the like) or solid-liquid phase change material and the like. The thermally conductive connection may be a direct contact connection, or a thermally conductive pad, a thermally conductive adhesive and the like may be arranged between the reinforcing structure 20 and the adjacent battery cell 11 to enhance the thermally conductive performance. By adjusting the temperature of the battery cell 11, it is possible to carry out cooling on the battery cell 11 for heat dissipation as well as carry out heating on the battery cell 11 for temperature rising, all of which are within the scope of the present application. The present embodiment will be described below by taking a case where heat dissipation is carried out on the battery cell 11 as an example. Based on the following description, an operation process of carrying out heating on the battery cell 11 for temperature rising may be understood.

Therefore, the reinforcing structure 20 and a heat exchange structure are designed into an integrated structure. The heat exchange medium may be introduced into the channel. Heat generated during the operation of the battery cell 11 may be thermally conducted to the reinforcing structure 20 and then is thermally conducted out through the heat exchange medium in the channel. As a result, heat dissipation can be carried out on the battery cell 11, and the reinforcing structure 20 has diversified functions.

For example, in an embodiment in which the reinforcing structure 20 includes the first reinforcing structure 21 and the second reinforcing structure 22, at least one of the first reinforcing structure 21 and the second reinforcing structure 22 has the channel configured to accommodate the heat exchange medium.

In some embodiments, each of the first reinforcing structure 21 and the second reinforcing structure 22 has the channel configured to accommodate the heat exchange medium. The first reinforcing structure 21 is in a thermally conductive connection with a surface of an end portion of the battery cell 11 in the first direction F1 for heat exchange, and the second reinforcing structure 22 may be in a thermally conductive connection with a surface of an end portion of the battery cell 12 in the second direction F1 for heat exchange. In this way, the first reinforcing structure 21 and the second reinforcing structure 22 can provide the heat exchange for the battery cell 11 at different sides.

In addition, the channel of the first reinforcing structure 21 is in communication with the channel of the second reinforcing structure 22, enabling the heat exchange medium in the channel of the first reinforcing structure 21 and the heat exchange medium in the channel of the second reinforcing structure 22 to flow therebetween.

In the one hand, each of the first reinforcing structure 21 and the second reinforcing structure 22 may have fewer inlets and outlets to simplify a connecting structure of a pipeline. For example, one inlet and one outlet are only defined to allow the heat exchange medium introduced through the inlet to flow into each region inside the reinforcing structure 20. After the heat exchange, the heat exchange medium converges at the outlet and flows out through the outlet. On the other hand, when heat generation on different side surfaces of the battery cell 11 are different, the heat exchange medium in a region with a relatively small heat exchange amount can circulate with the heat exchange medium in a region with a relatively large heat exchange amount in the first reinforcing structure 21 and the second reinforcing structure 22 to reduce a temperature of the heat exchange medium in the region with the relatively large heat exchange amount, which in turn improves a heat dissipation efficiency at a side surface with a relatively large heat generation on the battery cell 11.

In some embodiments, the at least one one reinforcing structure 21 includes one reinforcing structure 21 or a plurality of first reinforcing structures 21 arranged in the first direction F1. The battery 1000 further includes a diversion member and a confluence member. The diversion member and the confluence member are located on two sides of the battery row 10 in the second direction F2. An inlet of the channel of each first reinforcing structure 21 is in communication with the diversion member, and an outlet of the channel is in communication with the confluence member.

The diversion member, the confluence member, and the reinforcing structure 21 may form a flow path of the heat exchange medium. That is, the heat exchange medium can flow into the channel of the first reinforcing structure 21 through the diversion member, and then flow into the channel of the second reinforcing structure 22 in communication with the channel of the first reinforcing structure 21. After exchanging heat in the first reinforcing structure 21 and the second reinforcing structure 22, the heat exchange medium flows out through the confluence member. In an embodiment where the at least first reinforcing structure 21 includes a plurality of first reinforcing structures 21, the heat exchange medium can respectively flow into the channels of the plurality of first reinforcing structures 21 through the diversion member. After exchanging heat in the first reinforcing structure 21 and the second reinforcing structure 22, the heat exchange medium is converged to the confluence member and flows out through the confluence member. Therefore, the reinforcing structure 20 can achieve connection with an external refrigerating/heating system by means of the diversion member and the confluence member, which is beneficial for pipeline connection.

Specific structures of the diversion member and the confluence member are not specially limited. For example, the diversion member and the confluence member may be of any structure such as a pipe, or a plate, as long as the diversion member and the confluence member can be in communication with the channels of the plurality of first reinforcing structures 21.

It should be noted that in the embodiment where the diversion member and the confluence member are included, the second reinforcing structures 22 on the plurality of first reinforcing structures 21 may be separated from or connected to each other, which are all within the scope of the present application.

In other embodiments, as shown in FIGS. 1 and 4, the channel of each of the first reinforcing structures 21 is in communication with the channel of one second reinforcing structure 22. The second reinforcing structure 22 has a manifold inlet and a manifold outlet respectively defined on two ends of the second reinforcing structure 22 in the first direction F1.

That is, the second reinforcing structures 22 on all the first reinforcing structures 21 located at the same position in the second direction F2 are connected into one piece, and the integrally designed second reinforcing structure 22 cooperates with the plurality of battery rows 10 and is connected with the plurality of first reinforcing structures 21.

For example, as shown in FIGS. 1 and 4, the battery 1000 includes 32 battery rows 10. Each of the battery rows 10 includes two battery cells 11. The reinforcing structure 20 includes 16 first reinforcing structures 21 and one second reinforcing structure 22. The second reinforcing structure 22 continuously extends from the battery row 10 at one end to the battery row 10 at the other end in the first direction F1. In this way, two battery cells 11 of each of the battery rows 10 are separated from each other by the second reinforcing structure 22. The 16 first reinforcing structures 21 are all connected to the second reinforcing structure 22. In this way, the reinforcing structure 20 is formed into a fishbone-like structure. Two ends of the second reinforcing structure 22 in the first direction F1 may be exposed from end surfaces of the battery rows 10 at two ends. As a result, the manifold inlet and the manifold outlet at the two ends of the second reinforcing structure 22 can be in communication with an external refrigerating/heating system.

Therefore, the heat exchange medium can enter the channel of the second reinforcing structure 22 through the manifold inlet and flow along the second reinforcing structure 22 in the first direction F1. When sequentially flowing to a region in communication with the plurality of first reinforcing structures 21, the heat exchange medium may be diverted into the plurality of first reinforcing structures 21 to exchange heat with different side surfaces of the battery cells 21 in the first reinforcing structure 21 and the second reinforcing structure 22. After heat exchange, the heat exchange medium may flow to the second reinforcing structure 22 again and flows out through the manifold outlet. The second reinforcing structure 22 has functions of heat exchange, diversion and confluence. As a result, there is no need to additionally provide a diversion structure and a confluence structure, thereby simplifying the pipeline connection. Therefore, the internal space of the battery 1000 can be more fully utilized.

In some embodiments, as shown in FIGS. 1 to 4, each of the first reinforcing structure 21 and the second reinforcing structure 22 is formed into a plate-like structure. For example, the first reinforcing structure 21 is generally in a plate-like shape extending in the second direction F2 and the third direction F3, and the second reinforcing structure 22 is generally in a plate-like shape extending in the first direction F1 and the third direction F3. Thus, the inside channel is formed into a large-area channel structure, and thus the heat exchange medium can be circulated through the large-area channel. Therefore, the heat exchange medium in the second reinforcing structure 22 can flow into the first reinforcing structure 21, and the heat exchange medium in the first reinforcing structure 21 can flow to the second reinforcing structure 22 again, thereby prevent diversion and confluence from being influenced by relatively small space in the channel.

In some embodiments of the present application, the reinforcing structure 20 may also be provided with a buffer portion. The buffer portion is deformable under pressing of the battery cell 11.

The buffer portion can provide buffering through deformation to reduce the damage to the battery cell 11 when impact occurs. For example, when the impact occurs in the first direction F1, the battery cell 11 presses the buffer portion to reduce an impact force borne by the battery cell 11. In addition, in a long-time operation of the battery 1000, a predetermined gap between the battery cells 11 needs to be adjusted regularly to avoid a situation that the gap is too large in an early stage of use and the gap is insufficient in a later stage of use. By arranging the buffer portion, when an expansion force changes in the use process of the battery cell 11, a pressure can be applied to the buffer portion to deform the buffer portion, thereby adjusting a pressing force on the battery cell 11. In this way, the battery cell 11 is not excessively pressed to cause an infiltration difference, and is not be too loose to cause an interface difference.

In the embodiment of the present application, a specific structure of the buffer portion may be flexibly constructed as desired. For example, the buffer portion may include a buffer material layer, and/or a hollow cavity defined in the reinforcing structure 20.

The buffer material layer may be a material layer attached to a surface of the reinforcing structure 20. For example, the buffer material layer is made of an elastic material such as rubber and silica gel. When pressed, the buffer material layer is deformable to provide the buffering.

The buffer portion may have a hollow cavity defined in the reinforcing structure 20. In this way, the reinforcing structure 20 can be deformed when pressed to reduce a volume of the hollow cavity, thereby providing the buffering. For example, the hollow cavity may be an integrated cavity having a relatively large area, or include a plurality of small cavities separated from each other to form a honeycomb-like structure, both of which are within the scope of the present application. The reinforcing structure 20 and the buffer structure are integrated into one piece, and the functions are more diversified.

In some embodiments, as shown in FIGS. 1 to 8, an end surface of the battery cell 11 in the first direction F1 is a first surface 111, and an end surface of the battery cell 11 in the second direction F2 is a second surface 112. At least one first surface 111 of each battery cell 11 is adjacent to the first reinforcing structure 21, and at least one second surface 112 of each battery cell 11 is adjacent to the second reinforcing structure 22.

The end surface of the battery cell 11 in the first direction F1 is the first surface 111, and the battery cell 11 may have one, two or more first surfaces 111. In some embodiments, the battery cell 11 has two first surfaces 111 spaced apart from each other in the first direction F1. The end surface of the battery cell 11 in the second direction F2 is the second surface 112, and the battery cell 11 may have one, two or more second surfaces 112. In some embodiments, the battery cell 11 has two second surfaces 112 spaced apart from each other in the second direction F2.

At least one first surface 111 of each battery cell 11 is adjacent to the first reinforcing structure 21, and at least one second surface 112 of each battery cell 11 is adjacent to the second reinforcing structure 22. In this way, at least two adjacent surfaces of each battery cell 11 can cooperate with the reinforcing structure 20, which is more beneficial to enhancing the strength of each battery cell 11 and the overall structural strength uniformity of the battery 1000.

In some embodiments, as shown in FIGS. 1 to 8, an area of the first surface 111 is greater than an area of the second surface 112. With such a design, each battery cell 11 can be connected to the first reinforcing structure 21 with the surface having a larger area (the first surface 111), thereby improving the supporting stability to the battery row 10.

In some embodiments, the first surface 111 may be a surface of the battery cell 11 having the largest area. In some embodiments, in all side surfaces of the battery cell 11, each of the two opposite side surfaces in the first direction F1 has the largest area. As a result, the first reinforcing structure 21 can be connected to the side surfaces having the largest area of the battery cell 11. On the one hand, the supporting stability of the first reinforcing structure 21 on the battery row 10 can be improved, and on the other hand, since a heat dissipation amount of the surface with the largest area is relatively large, in the embodiment where the first reinforcing structure 21 has the channel, a heat dissipation efficiency of the battery cell 11 can be improved.

In addition, in the embodiment where a plurality of first reinforcing structures 21 are included, the first reinforcing structures 21 can achieve an effect similar to a clamp. The two adjacent first reinforcing structures 21 can sandwich the battery cell 11 between the surfaces with the largest area, to allow the electrode plates inside the battery cell 11 to be better tightly attached together, thereby improving an interface between the electrode plates. Meanwhile, it is possible to prevent the electrode plate from being staggered in a vibration process of the battery cell 11.

In some embodiments, as shown in FIG. 1, the dimension of the battery cell 11 in the second direction F2 is greater than the dimension of the battery cell 1 in the first direction F1. With such a design, the plurality of battery rows 10 are stacked in a direction along which the dimension is relatively small, which is beneficial to providing more compact structure.

In some embodiments, as shown in FIG. 1 and FIG. 2, the dimension of the battery cell 11 in the second direction F2 is greater than a dimension of the battery cell 1 in the third direction F3. With such a design, a whole dimension of the battery 1000 in the third direction F3 is relatively small, which is beneficial for reducing an overall thickness of the battery 1000.

For example, in some exemplary embodiments, when the battery 1000 is applied in the electric device 2000, the third direction F3 extends in a vertical direction, which indicates that a width direction of the battery cell 11 is the vertical direction. As a result, occupied vertical space is relatively small, and the overall height of the battery 1000 can be reduced. The plurality of battery rows 10 are stacked in the thickness direction of the battery cell 11, and the thickness direction of the battery cell 11 is a horizontal direction. In this way, a horizontal width of the battery 1000 is also relatively small, and the structure is compact.

Referring to FIG. 1 to FIG. 3, in the second direction F2, at least one end of the first reinforcing structure 21 extends beyond an end surface of the housing in the battery row 10 at a corresponding end. Specifically, all of the battery cells 11 in the battery row 10 are arranged in one row in the second direction F2, and an end surface, facing away from the adjacent battery cell 11, of each of the housings of the battery cells 11 located at two ends in the second direction F2, is formed as the end surface of each of the housings at two ends of the battery row 10. In the second direction F2, the first reinforcing structure 21 has a first end and a second end, and the end surfaces of the housings at two ends of the battery row 10 correspond to the first end and the second end respectively.

It is possible for the first end to extend beyond the end surface of the corresponding housing in the corresponding battery row 10 in a direction away from the second end, i.e., the first end is located at a side, facing away from the second end, of the end surface of the corresponding housing, or for the second end to extend beyond the end surface of the corresponding housing in the corresponding battery row 10 in a direction away from the first end, i.e., the second end is located at a side, facing away from the first end, of the end surface of the corresponding housing. It is also possible for the first end to extend beyond the end surface of the corresponding housing in the corresponding battery row 10 in the direction away from the second end, and for the second end to extend beyond the end surface of the corresponding housing in the corresponding battery row 10 in the direction away from the first end, i.e., the first end and the second end are respectively located at sides, facing away from each other, of the end surfaces of the housings at the two ends of the housing of the battery row 10. That is, a dimension of the first reinforcing structure 21 in the second direction F2 is greater than a spacing between the end surfaces of the housings at two ends of the battery row 10.

Due to the fact that at least one end of the first reinforcing structure 21 extends beyond the end surface of the housing at the corresponding end, when collision occurs, the part of the first reinforcing structure 21 extending beyond the end surface of the housing will be brought into contact with adjacent components such as the case 40 prior to the end surface of the housing of the battery row 10 at the corresponding end. Therefore, it is possible to prevent the housing of the battery cell 11 from directly colliding, to avoid damage to the housing, which in turn prevents an internal structure of the battery cell 11 from being damaged. It is also possible to prevent the end surface of the housing from being impacted and transmitting an external force to the adjacent battery cell 11, thereby improving the structural stability and safety of the whole battery row 10 and the whole battery 1000.

In the embodiment of the present application, the dimension of the first reinforcing structure 21 extending beyond the end surface of the housing in the battery row 10 the corresponding end may be flexibly set as desired.

For example, in some embodiments, an end surface of the housing of the battery row 10 in the second direction F2 is provided with an electrical connection portion 115, and the first reinforcing structure 21 extends beyond the electrical connection portion 115 at the corresponding end.

The electrical connection portion 115 is a component configured to implement an electrically connection of the battery cell 11. For example, the electrical connection portion 115 may be an electrode terminal. An end surface of the battery row 10 in the second direction F2 is referred to as the end surface of the housing, and is provided with the electrical connection portion 115. As a result, it is possible to implement the electrical connection between the battery cell 11 or the battery row 10 and other structures. For example, it is possible to realize series or parallel connection of the plurality of battery rows 10.

The first reinforcing structure 21 extends beyond the electrical connection portion 115 at the corresponding end. That is, the first end of the first reinforcing structure 21 is located on a side, facing away from the second end, of the electrical connection portion 115 at the corresponding end, and the second end of the first reinforcing structure 21 is located on a side, facing away from the first end, of the electrical connection portion 115 at the corresponding end facing away from the first end.

Therefore, when collision occurs, the first reinforcing structure 21 is first brought into contact with the adjacent component prior to the electrical connection portion 115, thereby preventing the electrical connection portion 115 from being damaged due to direct collision with the electrical connection portion 115. The first reinforcing structure 21 not only can protect the housing, but also can protect the electrical connection portion 115.

For example, in some embodiments, as shown in FIG. 3, the battery 1000 further includes an electrical connection member 12 connected to the electrical connection portion 115, and the first reinforcing structure 21 extends beyond the electrical connection member 12 at the corresponding end.

The electrical connection member 12 is configured to implement an electrical connection between two electrical connection portions 115. For example, the electrical connection member 12 may be a current collecting sheet. The first reinforcing structure 21 extends beyond the electrical connection member 12 at the corresponding end. That is, the first end of the first reinforcing structure 21 is located on a side, facing away from the second end, of the electrical connection member 12 at the corresponding end, and the second end of the first reinforcing structure 21 is located on a side, facing away from the first end, of the electrical connection member 12 at the corresponding end.

Therefore, when collision occurs, the first reinforcing structure 21 is first brought into contact with the adjacent component prior to the electrical connection member 12. Therefore, it is possible to prevent the electrical connection member 12 and the electrical connection structure from being damaged due to direct collision of the electrical connection member 12. The first reinforcing structure 21 can protect the housing, the electrical connection portion 115, and the electrical connection member 12, and the protection effect is more reliable.

In addition, as shown in FIG. 3, the first reinforcing structure 21 may be provided with an avoiding structure for avoiding the electrical connection member 12, in order for the electrical connection member 12 to connect the two adjacent battery rows 10. Therefore, it is beneficial to achieve series connection or parallel connection of the two battery rows 10.

For example, the first reinforcing structure 21 may be a reinforcing plate. The reinforcing plate has an avoiding through hole, and the electrical connection member 12 passes through the avoiding through hole to connect the electrical connection portions 115 of two adjacent battery rows 10.

The avoiding through hole penetrates two side surfaces of the first reinforcing structure 21 to form a hollow structure, enabling the electrical connection member 12 to pass through the first reinforcing structure 21 in the first direction F1 to be electrically connected to the electrical connection portions 115 of the two battery rows 10 on the two sides of the first reinforcing structure 21.

In some embodiments of the present application, in the second direction F2, a dimension by which the first reinforcing structure 21 extends beyond ranges from 3 mm to 50 mm. For example, in some exemplary embodiments, the dimension by which the first reinforcing structure 21 extends beyond is 3 mm, 5 mm, 10 mm, 20 mm, 30 mm, 40 mm, 50 mm, etc.

In an embodiment in which the first reinforcing structure 21 extends beyond the end surface of the housing and does not extend beyond the electrical connection portion 115, the dimension by which the first reinforcing structure 21 extends beyond refers to a spacing between an end portion of the first reinforcing structure 21 and the end surface of the housing at the corresponding end in the second direction F2. In an embodiment in which the first reinforcing structure 21 extends beyond the electrical connection portion 115 and does not extend beyond the electrical connection member 12, the dimension by which the first reinforcing structure 21 extends beyond refers to a spacing between the end portion of the first reinforcing structure 21 and the electrical connection portion 115 at the corresponding end in the second direction F2. In an embodiment where the first reinforcing structure 21 extends beyond the electrical connection member 12, the dimension by which the first reinforcing structure 21 extends beyond refers to a spacing between the end portion of the first reinforcing structure 21 and the electrical connection member 12 at the corresponding end in the second direction F2.

By setting the dimension by which the first reinforcing structure 21 extends beyond within the value range as described above, this dimension is large enough to ensure the effect of preventing the battery cell 11 from being impacted. In addition, this dimension is prevented from being too large to cause the first reinforcing structure 21 to occupy a too large space, which is beneficial to providing more compact structure.

According to some embodiments of the present application, a thickness of the first reinforcing structure 21 in the first direction F1 ranges from 1 mm to 8 mm. For example, in some exemplary embodiments, the thickness of the first reinforcing structure 21 is 1 mm, 3 mm, 5 mm, 7 mm, 8 mm, etc.

Too small thickness of the first reinforcing structure 21 will result in poor structural strength of the first reinforcing structure 21, which is not beneficial for the anti-collision effect. Too large thickness of the first reinforcing structure 21 will result in large occupied space and increased cost. In the value range as described above, the structure enhancement effect on the battery 1000 and the anti-collision effect can be ensured. In addition, the structure is compact, and the cost can be reduced.

According to some embodiments of the present application, as shown in FIGS. 1 to 3 and FIGS. 7 and 8, each battery row 10 includes two battery cells 11. That is, the two battery cells 11 are arranged in one row in the second direction F2. The electrical connection portions 115 of the two battery cells 11 are arranged on two sides facing away from each other, and the second reinforcing structure 22 is arranged between the two battery cells 11.

For example, the electrical connection portion 115 of each battery cell 11 includes two electrode terminals arranged on the same side, and the two electrode terminals may be respectively a positive electrode terminal and a negative electrode terminal. In this way, the two electrode terminals can be electrically connected to each other at the same side of the battery cell 11, and the electrical connection structures share the same space, thereby facilitating a more compact structure.

By arranging the electrical connection portions 115 of the two battery cells 11 on the sides facing away from each other, the electrical connection portions 115 of the battery cells 11, located on the same side in the second direction F2, of the plurality of battery rows 10 are all arranged on the same side. As shown in FIG. 1, the 64 electrical connection portions 115 of the 32 battery rows 10 are formed into two columns spaced apart from each other in the second direction F2, and each column includes 32 electrical connection portions 115 arranged in the first direction F1.

Therefore, a distance between two of the plurality of electric connection portions 115 in one column is closer, thereby facilitating the electrical connection between the battery cells 11. In addition, bottom portions of the two battery cells 11 in one battery row 10 (i.e., end portions facing away from the electrical connection portion 115) may be in surface connection with each other. In this way, the two battery cells 11 are in surface contact with the second reinforcing structure 22, to provide more stable supporting and position-limiting. Therefore, the overall structural strength is higher.

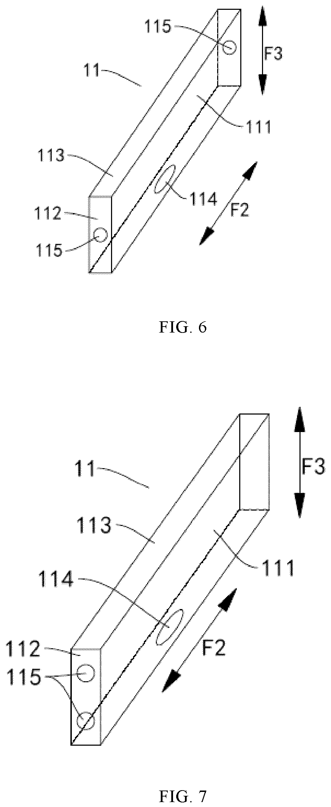

Certainly, according to actual requirements, in other embodiments, as shown in FIG. 6, the electrical connection portion 115 of each battery cell 11 includes two electrode terminals. The two electrode terminals may be respectively provided on two sides of the battery cell 11 in the second direction F2. In this way, some of the electrical connection structures can be located in middle of the battery 1000, thereby reducing risk of damage of the middle electrical connection structure.

In an embodiment where the battery row 10 includes a plurality of battery cells 11, two to five battery cells 11 may be provided, which can avoid too large overall dimension of the battery 1000 due to excessive battery cells 11.

According to some embodiments of the present application, as shown in FIGS. 6 to 8, the battery cell 11 is provided with a pressure relief portion 114 and the electrical connection portion 115. When an internal pressure of the battery cell 11 is too large (for example, thermal runaway occurs), the pressure relief portion 114 can release substances (such as gas, liquid, particulate matter, etc.) inside the battery cell 11 to reduce the internal pressure of the battery cell 11, thereby avoiding dangerous accidents such as deflagration of the battery cell 11 due to too fast pressurization inside the battery cell 11. For example, the pressure relief portion 114 may be an explosion-proof valve, an explosion-proof sheet, or the like.

In addition, the pressure relief portion 114 and the electrical connection portion 115 may be arranged on different sides of the battery cell 11. It is beneficial to ensure that there is a relatively large spacing between the electrical connection portion 115 and the pressure relief portion 114 of the battery cell 11, to effectively avoid problems such as insulation failure, high pressure ignition, initiation of fire explosion and the like caused by the fact that conductive particles in emissions discharged from the battery cell 11 through its own pressure relief portion 114 flows to its own electrical connection portion 115 under conditions of thermal runaway and the like.

In some embodiments, as shown in FIGS. 6 and 7, an end surface of the battery cell 11 in the second direction F2 is a second surface 112, and an end surface of the battery cell 11 in the third direction F3 is a third surface 113. The first direction F1 and the second direction F2 are both perpendicular to the third direction F3. The electrical connection portion 115 is disposed on the second surface 112, and the pressure relief portion 114 is disposed on the third surface 113. In other words, the pressure relief portion 114 and the electrical connection portion 115 are respectively arranged on two adjacent side surfaces of the battery cell 11.

Therefore, a predetermined safe distance is provided between the electrical connection portion 115 and the pressure relief portion 114, thereby alleviating the influence of emissions discharged from the pressure relief portion 114 on the electrical connection portion 115 and improving the use safety and reliability of the battery 1000.

Further, the plurality of battery rows 10 is arranged in the first direction F1, and the plurality of battery cells 11 in one battery row 10 is arranged in the second direction F2. In addition, the pressure relief portion 114 is arranged on the third surface 113. In this way, all the pressure relief portions 114 of the respective battery cells 11 in one battery row 10 do not discharge towards any electrical connection portion 115 in the one battery row 10 nor towards any electrical connection portion 115 of the battery row 10 adjacent to the one battery row 10, thereby protecting the electrical connection portion 115 of each battery cell 11 from the emissions discharged from other battery cells 11, which ensures the use safety and reliability of the battery 1000.

An electric device 2000 according to an embodiment in a second aspect of the present application includes the battery 1000 according to the embodiment in the first aspect of the present application. The battery 1000 is configured to provide electric energy to the electric device 2000. Therefore, by adopting the battery 1000 described above, use safety and reliability of the electric device 2000 can be improved.

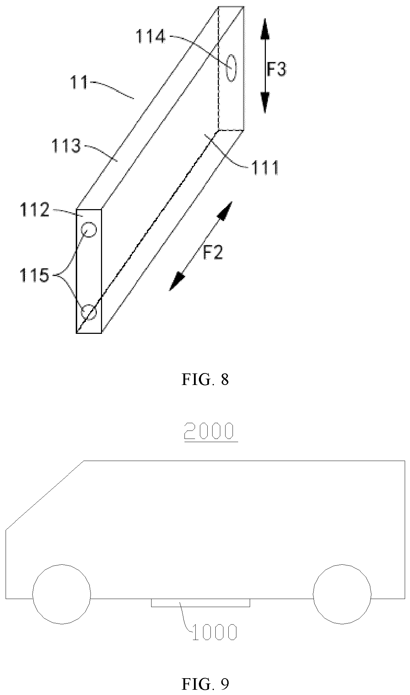

Optionally, as shown in FIG. 9, when the battery 1000 is applied in a vehicle, the battery 1000 may be arranged at bottom, or head, or tail of the vehicle. The battery 1000 may be used as a power supply of the vehicle. For example, the battery 1000 may be used as an operating power supply for the vehicle. The vehicle may also include a controller and a motor. The controller is configured to control the battery 1000 to supply power to the motor, for example, to provide operation power demand when starting, navigating, and running.

A battery 1000 and a vehicle having the battery 1000 according to an exemplary embodiment of the present application will be described below with reference to the drawings.

As shown in FIG. 9, the battery 1000 is arranged on a chassis of the vehicle. As shown in FIGS. 1 to 4, the battery 1000 includes a case 40 and 32 battery rows 10 provided in the case 40 and arranged in a first direction F1. The first direction F1 is a first horizontal direction. Each of the battery rows 10 includes two battery cells 11 arranged in a second direction F2, and the second direction F2 is a second horizontal direction. Each of the battery cells 11 includes a housing and an electrical connection portions 115 provided on an end of the housing in the second direction F2. For two battery cells 11 in one battery row 10, the electrical connection portions 115 are provided on sides facing away from each other. A dimension of the housing of each battery cell 11 in the second direction F2 is greater than a dimension of the housing in the third direction F3, and the dimension of the housing in the third direction F3 is greater than a dimension of the housing in the first direction F1. The third direction F3 is a vertical direction. That is, a length direction of the battery cell 11 extends in the second direction F2, a width direction of the battery cell 11 extends in the vertical direction, and a thickness direction of the battery cell 11 extends in the first direction F1.

The reinforcing structure 20 includes 16 first reinforcing structures 21 and one integrally designed second reinforcing structure 22. The first reinforcing structures 21 and the second reinforcing structures 22 are flat plate structures to form a fishbone-like structure.

The 16 first reinforcing structures 21 are arranged in the first direction F1, and two battery rows 10 are provided between two adjacent first reinforcing structures 21. Two side surfaces of each of the first reinforcing structures 21 are provided with an adhesive layer to be bonded to the surfaces, with the largest area, of the battery cells 11 on the two sides, to form a one-piece structure. Therefore, a stacked structure of the battery cell 11-the first reinforcing structure 21-the battery cell 11 is formed, and the strength of the battery 1000 can be further enhanced.

The integrally designed second reinforcing structure 22 cooperates with the 32 battery rows 10. That is, the two battery cells 11 of each battery row 10 are bonded to the two side surfaces of the second reinforcing structure 22.

Meanwhile, each of the first reinforcing structure 21 and the second reinforcing structure 22 has a channel, and the channel of each first reinforcing structure 21 is in communication with the channel of the second reinforcing structure 22. The two ends of the second reinforcing structure 22 have a manifold inlet and a manifold outlet of the channel respectively, and the second reinforcing structure 22 can provide diversion and confluence. There is no need to arrange a diversion structure and a confluence structure on the two sides in the second direction F2. Therefore, the internal space of the battery 1000 can be utilized better.

One first surface 111 of each battery cell 11 is connected to the first reinforcing structure 21, and one second surface 112 is connected to the second reinforcing structure 22. In this way, simultaneous heat exchange of the surfaces with the largest area and a bottom surface can be achieved. In addition, the first reinforcing structure 21 sandwiches the battery cell 11 by means of the surfaces with the largest area, to achieve the effect similar to a clamp. A pressure relief portion 114 of the battery cell 11 is arranged on the third surface 113 of the battery cell 11 and is arranged downwards, to prevent a high pressure connection structure from being influenced by pressure relief due to the fact that high pressure and pressure relief occur at the same end of the battery cell 11.

By providing the reinforcing structure 20, after assembling the battery cells 11 into the battery 1000, the overall strength and stability of the battery 1000 can be enhanced, which can relieve or avoid the damage of the battery cell 11 due to impaction, thereby avoiding the safety risk.

It should be noted that, the embodiments in the present application and the features in the embodiments may be combined with each other without conflict.

The above description is only the preferred embodiments of the present application and not used for limiting the present application, and it is apparent for those skilled in the art that the present application may have various changes and modifies. Any modification, equivalent replacement, improvement, and the like made within the spirit and principle of the present application should fall within the scope of the present application.

## Claims

1. A battery (1000), comprising:
a plurality of battery rows (10) arranged in a first direction (F1), each of the plurality of battery rows (10) comprising a plurality of battery cells (11) arranged in a second direction (F2) perpendicular to the first direction (F1); and
a reinforcing structure (20) comprising a first reinforcing structure (21) extending in the second direction (F2) and a second reinforcing structure (22) extending in the first direction (F1), the first reinforcing structure (21) being connected to the second reinforcing structure (22), the first reinforcing structure (21) and the plurality of battery rows (10) being stacked in the first direction (F1), and the second reinforcing structure (22) and the plurality of battery cells (11) in one battery row (10) being stacked in the second direction (F2).

2. The battery (1000) according to claim 1, wherein each of the plurality of battery cells (11) in one battery row (10) is connected to the first reinforcing structure (21) which is adjacent to the one battery row (10).

3. The battery (1000) according to claim 1 or 2, wherein:
the first reinforcing structure (21) is located between two adjacent battery rows (10); and
each of the two adjacent battery rows (10) is connected to the first reinforcing structure (21).

4. The battery (1000) according to any one of claims 1 to 3, wherein:
the second reinforcing structure (22) is located between two adjacent battery cells (11) in the one battery row (10); and
each of the two adjacent battery cells (11) in the one battery row (10) is connected to the second reinforcing structure (22).

5. The battery (1000) according to any one of claims 1 to 4, wherein the second reinforcing structure (22) is arranged on at least one side of the first reinforcing structure (21) in the first direction (F1).

6. The battery (1000) according to any one of claims 1 to 5, wherein:
the first reinforcing structure (21) comprises a plurality of first reinforcing structures (21) arranged in the first direction (F1); and
the second reinforcing structures (22) on two adjacent first reinforcing structures (21) of the plurality of first reinforcing structures (21) are separated from or connected to each other.

7. The battery (1000) according to any one of claims 1 to 6, wherein:
the reinforcing structure (20) has a channel configured to accommodate heat exchange medium; and
the reinforcing structure (20) is in a thermally conductive connection with a battery cell (11) adjacent to the reinforcing structure (20) for adjusting a temperature of the battery cell (11).

8. The battery (1000) according to claim 7, wherein each of the first reinforcing structure (21) and the second reinforcing structure (22) has the channel, the channel of the first reinforcing structure (21) being in communication with the channel of the second reinforcing structure (22).

9. The battery (1000) according to claim 8, wherein:
the first reinforcing structure (21) comprises one first reinforcing structure or a plurality of first reinforcing structures (21) arranged in the first direction (F1);
the battery (1000) further comprises a diversion member and a confluence member respectively located on two sides of each of the plurality of battery rows (10) in the second direction (F2); and
the channel of each first reinforcing structure (21) has an inlet in communication with the diversion member and an outlet in communication with the confluence member.

10. The battery (1000) according to claim 8, wherein:
the channel of each first reinforcing structure (21) is in communication with the channel of one second reinforcing structure (22); and
the second reinforcing structure (22) has a manifold inlet and a manifold outlet respectively defined on two ends of the second reinforcing structure (22) in the first direction (F1).

11. The battery (1000) according to any one of claims 1 to 10, wherein:
an end surface of the battery cell (11) in the first direction (F1) is a first surface (111);
an end surface of the battery cell (11) in the second direction (F2) is a second surface (112);
at least one first surface (111) of each battery cell (11) is adjacent to the first reinforcing structure (21); and
at least one second surface (112) of each battery cell (11) is adjacent to the second reinforcing structure (22).

12. The battery (1000) according to claim 11, wherein an area of the first surface (111) is greater than an area of the second surface (112).

13. The battery (1000) according to any one of claims 1 to 12, wherein an end surface of the battery cell (11) in the first direction (F1) is a first surface (111) having the largest area.

14. The battery (1000) according to any one of claims 1 to 13, wherein in the second direction (F2), at least one end of the first reinforcing structure (21) extends beyond an end surface of a housing of the battery row (10) at a corresponding end.

15. The battery (1000) according to claim 14, wherein each of the plurality of battery rows (10) has an electrical connection portion (115) provided on an end surface of at least one end of the battery row (10) in the second direction (F2), the first reinforcing structure (21) exceeding beyond the electrical connection portion (115) at the corresponding end.

16. The battery (1000) according to claim 15, further comprising an electrical connection member (12) connected to the electrical connection portion (115), the first reinforcing structure (21) exceeding beyond the electrical connection member (12) at the corresponding end.

17. The battery (1000) according to claim 16, wherein the first reinforcing structure (12) is a reinforcing plate having an avoiding through hole, the electrical connection member (12) passing through the avoiding through hole to connect the electrical connection portions (112) of two adjacent battery rows (10).

18. The battery (1000) according to any one of claims 1 to 17, wherein:
each of the plurality of battery rows (10) comprises two battery cells (11), each of the two battery cells (11) comprising an electrical connection portion (115) being arranged at each of sides of the two battery cells (11) that face away from each other; and
the second reinforcing structure (22) is arranged between the two battery cells (11).

19. The battery (1000) according to any one of claims 1 to 18, wherein the battery cell (11) has a pressure relief portion (114) and an electrical connection portion (115), the pressure relief portion (114) and the electrical connection portion (115) being arranged on different sides of the battery cell (11).

20. The battery (1000) according to claim 19, wherein:
an end surface of the battery cell (11) in the second direction (F2) is a second surface (112);
an end surface of the battery cell (11) in a third direction (F3) is a third surface (113), the third direction (F3) being perpendicular to each of the first direction (F1) and the second direction (F2);
the electrical connection portion (115) is arranged on the second surface (112); and
the pressure relief portion (114) is arranged on the third surface (113).

21. An electric device (2000), comprising the battery (1000) according to any one of claims 1 to 20, wherein the battery (1000) is configured to provide power to the electric device (2000).
